# EUROPÄISCHE PATENTSCHRIFT

(11) **EP 0 661 463 B1**
(45) Veröffentlichungstag und Bekanntmachung des Hinweises auf die Patenterteilung: **25.03.1998**
(21) Anmeldenummer: 94116539.1
(22) Anmeldetag: 20.10.1994
(51) Int. Cl.: F16B 13/14

(54) **Verbundanker**
Compound anchor
Dispositif d'ancrage composite

(30) Priorität: 16.12.1993 DE 4342887
(43) Veröffentlichungstag der Anmeldung: 05.07.1995
(73) Patentinhaber: fischerwerke Artur Fischer GmbH & Co. KG, D-72178 Waldachtal (DE)
(72) Erfinder: Haug, Willi, D-72250 Freudenstadt/Musbach (DE)

(56) Entgegenhaltungen:
- EP-A- 0 502 348
- EP-A- 0 597 217
- DE-A- 3 207 867

## Beschreibung

Die vorliegende Erfindung betrifft einen Verbundanker bestehend aus einer Ankerstange und einer durch die Ankerstange zerstörbaren Patrone gemäß dem Oberbegriff des Hauptanspruchs.

Aus der DE 41 06 311 C1 ist ein Verbundanker zur Befestigung einer Ankerstange in einem Bohrloch bekannt, bei dem ein mit Wasser gekapselter Innenbehälter verwendet wird, der aus über die Länge der Patrone verteilt angeordneten und beim Eintreiben der Ankerstange einzeln nacheinander zerstörbaren Innenbehälterteilen besteht. Der Innenbehälter wird dabei beginnend von der Bohrlochöffnung nach innen zerstört. Dabei kann es passieren, daß die Durchmischung gestört und bereits im Eingangsbereich des Bohrlochs eine Aushärtung erfolgt. Infolgedessen ergeben sich nicht reproduzierbare und verschiedene Auszugswerte, je nach dem wie die individuelle Durchmischung in dem betreffenden Bohrloch durch die Ankerstange erfolgt ist.

Der vorliegenden Erfindung liegt daher die Aufgabe zugrunde, einen Verbundanker vorzuschlagen, der hinsichtlich der Durchmischung des Bindemittels verbessert ist.

Die Lösung dieser Aufgabe erfolgt durch einen Verbundanker mit den Merkmalen des Hauptanspruchs. Weitere vorteilhafte Ausgestaltungen sind den Unteransprüchen zu entnehmen.

Der erfindungsgemäß ausgestaltete Verbundanker weist eine Patrone auf, bei der der Innenbehälter hinsichtlich Belastbarkeit abgestufte Sollbruchstellen enthält. Beim Eintreiben der Ankerstange zerbricht der Innenbehälter von den beiden Enden des Innenbehälters zur Mitte hin nacheinander an den einzelnen Sollbruchstellen, so daß das in dem jeweiligen Innenbehälterabschnitt befindliche Wasser an die Umgebung abgegeben wird. Durch die Zerstörung des Innenbehälters von beiden Enden beginnend, wird im Bereich der oberen Hälfte das Wasser gleich mit dem Mörtel vermischt. Der untere Teil der Flüssigkeit steigt vom unteren, am weitesten in der Bohrung sich befindenden Ende durch den Mörtel. Versuche haben gezeigt, daß dadurch die vollständige Setztiefe der Ankerstange und bessere Auszugswerte erreicht werden. Die erfindungsgemäße Ausgestaltung des Innenbehälters wirkt sich besonders dann von Vorteil aus, wenn dem Wasser ein Mittel zugefügt ist, das bei der Zerstörung der Patrone ein Ablaufen unabhängig vom Verlauf des Bohrloches verhindert.

Gemäß einer bevorzugten Ausführungsform ist der Innenbehälter so ausgestaltet, daß er an seinen beiden Endabschnitten Spitzen aufweist, die auf Druck in axialer Richtung zerbrechen. Damit wird gewährleistet, daß die beiden sich gegenüberliegenden Spitzen mit einem relativ kleinen Volumen beim Eintreiben der Ankerstange zuerst brechen und die erste Flüssigkeit an den umgebenden Mörtel abgeben. Gemäß einer weiteren bevorzugten Ausführungsform schließen sich an die Endabschnitte jeweils ein kegelstumpfförmiger Abschnitt an, der eine etwas fester ausgestaltete Sollbruchstelle zu dem daran anschließenden vorteilhafterweise zylindrisch ausgebildeten zentralen Abschnitt aufweist. Dadurch wird ein abgestuftes Zerbrechen des Innenbehälters von beiden Enden zur Mitte hin gewährleistet.

Gemäß einer bevorzugten Ausführungsform ist der Innenbehälter aus Glas hergestellt. Die Glassplitter verbessern zusammen mit den Komponenten des Bindemittels den Verbund und die Befestigung der Ankerstange .

Gemäß einer weiteren bevorzugten Ausführungsform ist das Wasser mit einem Thixotropiermittel versehen, das ohne Einwirkung von Scherkräften ein pastöses Verhalten bewirkt. Dadurch wird erreicht, daß bei der Zerstörung der Patrone die Wasserkomponente unabhängig vom Verlauf des Bohrloches nicht abfließen kann. Durch die von der drehenden Ankerstange beim Einschieben in das Bohrloch ausgehenden Scherkräfte wird die Wasserkomponente entsprechend dem Fortschritt der Ankerstange verflüssigt, so daß eine gleichmäßige Tränkung und Durchmischung des Bindemittels erfolgt. In der teigartigen Mischung ist sowohl der pulverförmige Mörtel als auch das Wasser gebunden, so daß ein Ausfließen einer der beiden Komponenten aus dem Bohrloch während des Mischvorgangs auch bei einer Überkopfmontage nicht zu befürchten ist. Außerdem wird auch nur die Wasserkomponente dem Mörtel zugeführt, die dem gerade zerstörten Innenbehälterabschnitt entspricht. Aus dem noch nicht zerstörten Innenbehälterabschnitt kann dadurch kein Wasser austreten. Als Thixotropiermittel hat sich amorphe, pyrogene Kieselsäure als besonders geeignet erwiesen, die der Wasserkomponente mit einem Anteil von 0,5 bis 2 % zugemischt wird.

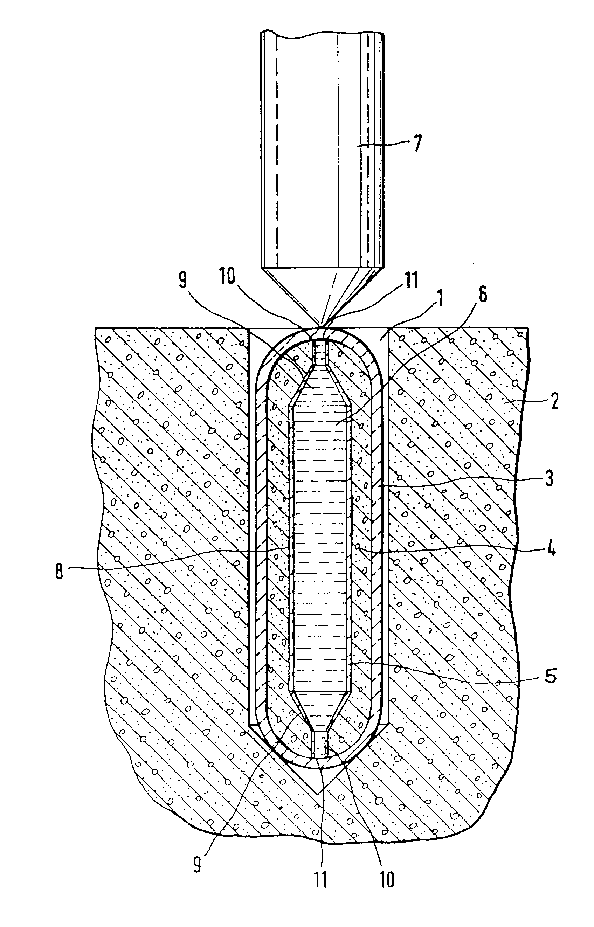

Nachfolgend wird die Erfindung anhand eines in der Zeichnung dargestellten Ausführungsbeispiels näher erläutert.

In einem Bohrloch 1 eines Bauteils 2 befindet sich eine Patrone 3 mit mineralischem Mörtel 4 und einem Innenbehälter 5. Der Innenbehälter 5 ist mit Thixotropiermittel versehenem Wasser 6 gefüllt, das beim Zerbrechen des Innenbehälters 5 mit dem mineralischen Mörtel 4 ein Bindemittel zur Befestigung der Ankerstange 7 bildet.

Der Innenbehälter 5 erstreckt sich über die Länge der Patrone 3 und ist symmetrisch zu einer durch die Mitte des Innenbehälters und quer verlaufenden Symmetrieachse. Der Innenbehälter 5 weist einen zentralen zylindrisch ausgebildeten Abschnitt 8 auf, an den sich an beiden Enden ein konisch verlaufender Abschnitt 9 anschließt, der wiederum in einen zylindrischen Endabschnitt 10 übergeht. Der Endabschnitt 10 ist an seiner Spitze 11 porös ausgebildet, so daß die Spitze 11 an beiden Enden des Innenbehälters 5 auf Druck zerbricht. Dieser Druck wird durch das Eintreiben der Ankerstange 7 in das Bohrloch 1 bewirkt. Durch weiteres Vorwärtstreiben der Ankerstange 7 zerbricht als nächstes der konische Abschnitt 9 an beiden Enden des Innenbehälters 5, da dieser vom Aufbau her leichter zerbrechlich ausgestaltet ist, als der zentrale Abschnitt 8, der zuletzt durch die Krafteinwirkung durch die Ankerstange 7 zerbricht. Die einzelnen Abschnitte des Innenbehälters 5 weisen unterschiedliche Wandstärken auf, wobei der zentrale Abschnitt 8 die dickste und der Endabschnitt 10 die dünnste Wandstärke aufweist.

Durch die Zerstörung des Innenbehälters von beiden Enden her wird eine verbesserte Durchmischung und damit die vollständige Setztiefe der Ankerstange erreicht. Bessere Auszugswerte der Ankerstange konnten in Versuchen nachgewiesen werden.

Der Endabschnitt 10 des Innenbehälters 5 ist sehr dünnwandig und sehr empfindlich und kann zusammen mit dem konischen Abschnitt 9 durch Ziehen des Glasrohlings nach dem Befüllen mit der Wasserkomponente hergestellt werden.

## Patentansprüche

1. Verbundanker, bestehend aus einer Ankerstange (7) und einer durch die Ankerstange zerstörbaren Patrone (3), die mit einem aushärtbaren Bindemittel aus einem mineralischem Mörtel als feste Komponente (4) und mit einem Wasser als flüssige Komponente (6) kapselnden Innenbehehälter (5) aus ebenfalls zerbrechlichem Material gefüllt ist, wobei der Innenbehälter (5) aus über die Länge der Patrone verteilt angeordneten, voneinander abgegrenzten und beim Eintreiben der Ankerstange (7) nacheinander zerstörbaren Innenbehälterabschnitten besteht, **dadurch gekennzeichnet**, daß der Innenbehälter (5) hinsichlich Belastbarkeit abgestufte Sollbruchstellen (11, 9) aufweist, die beim Eintreiben der Ankerstange (7) von den beiden Enden (10) des Innenbehälters (5) zur Mitte hin nacheinander zerbrechen und das in dem jeweiligen Innenbehälterabschnitt (10, 9, 8) befindliche Wasser (6) an die Umgebung (4) abgeben.

2. Verbundanker nach Anspruch 1, **dadurch gekennzeichnet**, daß die Innenbehälterabschnitte (8, 9, 10) verschiedene Volumina aufweisen.

3. Verbundanker nach Anspruch 2, **dadurch gekennzeichnet**, daß der Innenbehälter an beiden Enden Endabschnitte(10) aufweist, deren Spitzen (11) auf Druck brechen.

4. Verbundanker nach Anspruch 3, **dadurch gekennzeichnet**, daß der Innenbehälter (5) im Anschluß an die Endabschnitte (10) kegelstumpfförmige Abschnitte (9) aufweist.

5. Verbundanker nach Anspruch 4, **dadurch gekennzeichnet**, daß der an die kegelstumpfförmigen Abschnitte (9) anschließende zentrale Abschnitt (8) zylindrisch ausgebildet ist.

6. Verbundanker nach einem der vorangegangenen Ansprüche, **dadurch gekennzeichnet**, daß der Innenbehälter (5) aus Glas hergestellt ist.

7. Verbundanker nach Anspruch 6, **dadurch gekennzeichnet**, daß die Abschnitte (8, 9, 10) unterschiedliche Wandstärken aufweisen, die vom Endabschnitt (10) zum zentralen Abschnitt (8) zunimmt.

8. Verbundanker nach einem der vorangegangenen Ansprüche, **dadurch gekennzeichnet**, daß das Wasser mit einem Thixotropiermittel versehen ist, das ohne Einwirkung von Scherkräften ein pastöses Verhalten bewirkt.

9. Verbundanker nach Anspruch 8, **dadurch gekennzeichnet**, daß das Thixotropiermittel amorphe, pyrogene Kieselsäure ist, die dem Wasser mit 0,5 bis 2 % Anteil zugemischt ist.

## Claims

1. A composite anchor, consisting of an anchoring rod and a cartridge (3) capable of being crushed by the anchoring rod, the cartridge being filled with a hardenable bonding agent comprising a mineral mortar as the solid component (4), and an inner container (5), also of crushable material, encapsulating water as the liquid component, wherein the inner container (5) consists of inner container sections that are distributed over the length of the cartridge, are delimited from one another and are crushable in succession as the anchoring rod (7)is driven in, characterized in that the inner container (5) has predetermined break points (11, 9) that are graded in respect of their capacity to resist stress and break in succession from each end (10) of the inner container (5) towards the middle as the anchoring rod (7) is driven in, and release the water (6) located in the respective inner container section (10, 9, 8) into the surrounding area (4).

2. A composite anchor according to claim 1, characterized in that the inner container sections (8, 9, 10) have different volumes.

3. A composite anchor according to claim 2, characterized in that the inner container has end sections (10) at each end, the tips (11) of which break when pressure is applied.

4. A composite anchor according to claim 3, characterized in that the inner container (5) has truncated cone-shaped sections (9) adjoining the end sections (10).

5. A composite anchor according to claim 4, characterized in that the central section (8) adjoining the truncated cone-shaped sections (9) is of cylindrical construction.

6. A composite anchor according to one of the preceding claims, characterized in that the inner container (5) is made from glass.

7. A composite anchor according to claim 6, characterized in that the sections (8, 9, 10) have different wall thicknesses, there being an increase in thickness from the end section (10) towards the central section (8).

8. A composite anchor according to one of the preceding claims, characterized in that the water is admixed with a thixotropic agent which causes the water to behave like a paste in the absence of shear forces.

9. A composite anchor according to claim 8, characterized in that the thixotropic agent is amorphous, pyrogenic silicic acid, which is admixed with the water in a proportion of 0.5 to 2 %.

## Revendications

1. Dispositif d'ancrage composite constitué d'une tige d'ancrage (7) et d'une cartouche (3) susceptible d'être détruite par la tige d'ancrage, dispositif qui est rempli d'un liant durcissable en mortier minéral, en tant que composant solide (4) et d'un récipient intérieur (5) en matériau également susceptible d'être cassé contenant de l'eau en tant que composant liquide (6), et scellé, le récipient intérieur (5) étant constitué de tronçons de récipient intérieur disposés en étant répartis sur la longueur de la cartouche, délimités les uns par rapport aux autres et susceptibles d'être détruits les uns après les autres lors de la pénétration de la tige d'ancrage (7), **caractérisé en ce que** le récipient intérieur (5) présente des zones (11, 9) de rupture préférentielle, étagées en ce qui concerne leur capacité de résistance aux contraintes, et qui se brisent les unes après les autres à partir des deux extrémités du récipient intérieur (5), en direction du milieu, lors de la pénétration de la tige d'ancrage (7) et qui délivrent dans son voisinage (4) l'eau (6) qui se trouve dans le tronçon (10, 9, 8) de récipient intérieur considéré.

2. Dispositif d'ancrage composite selon la revendication 1, **caractérisé en ce que** les tronçons (8, 9, 10) de récipient intérieur présentent des volumes différents.

3. Dispositif d'ancrage composite selon la revendication 2, **caractérisé en ce que** le récipient intérieur présente aux deux extrémités des tronçons d'extrémité (10) dont les pointes (11) se brisent en cas d'application de pression.

4. Dispositif d'ancrage composite selon la revendication 3, **caractérisé en ce que** le récipient intérieur (5) présente des tronçons (9) de forme tronconique, qui se raccordent aux tronçons d'extrémité (10).

5. Dispositif d'ancrage composite selon la revendication 4, **caractérisé en ce que** le tronçon central (8) qui se raccorde aux tronçons (9) de forme tronconique, a une forme cylindrique.

6. Dispositif d'ancrage composite selon l'une des revendications précédentes, **caractérisé en ce que** le récipient intérieur (5) est fabriqué en verre.

7. Dispositif d'ancrage composite selon la revendication 6, **caractérisé en ce que** les tronçons (8, 9, 10) présentent des épaisseurs de paroi différentes qui augmentent en partant du tronçon d'extrémité (10) jusqu'au tronçon central (8).

8. Dispositif d'ancrage composite selon l'une des revendications précédentes, **caractérisé en ce que** l'eau est additionnée d'un agent de thixotropie, qui a pour conséquence un comportement de produit pâteux en l'absence de l'application de forces de cisaillement.

9. Dispositif d'ancrage composite selon la revendication 8, **caractérisé en ce que** l'agent de thixotropie est de l'acide silicique pyrogène amorphe, qui est ajouté et mélangé à l'eau dans une proportion de 0,5 à 2%.
